# DEMANDE DE BREVET EUROPEEN

(11) **EP 4 806 760 A1**
(43) Date de publication de la demande: **16.09.2026**
(21) Numéro de dépôt: 26164169.0
(22) Date de dépôt: 12.03.2026
(51) Int. Cl.: B62B 3/10, B62B 5/00

(54) **CHARIOT PORTE KART**

(30) Priorité: 14.03.2025 FR 2502603
(71) Demandeur: Fittipaldi, Sabine, 13370 Mallemort (FR)
(72) Inventeur: FITTIPALDI, Sabine, 13370 Mallemort (FR)
(74) Mandataire: Cabinet Camus Lebkiri

(57) **Abrégé**

Un aspect de l'invention concerne un chariot porte-kart (1) comprenant :
- Une structure (10) adaptée pour supporter le poids d'un kart,
- Des supports (20) adaptés pour assurer la stabilité du kart lors d'un déplacement du chariot porte-kart (1), et
- Exactement quatre roues (30, 31, 32, 33),
le chariot porte kart étant caractérisé en ce qu'il comporte en outre :
- Un moteur électrique (40), et
- Au moins deux roues motorisées par le moteur électrique (40).

## Description

### DOMAINE TECHNIQUE DE L'INVENTION

Le domaine technique de l'invention est celui des chariots porte-kart.

La présente invention concerne un chariot porte-kart comprenant des roues motorisées.

### ARRIERE-PLAN TECHNOLOGIQUE DE L'INVENTION

Un chariot porte-kart est un équipement conçu pour transporter un kart, i.e. un véhicule de course à petite échelle, facilement d'un endroit à un autre. Ce type de chariot est souvent utilisé par les pilotes de karting, que ce soit pour le transport en circuit ou pour des déplacements entre différents événements.

Un chariot porte-kart comprend :
- Une structure généralement constituée d'un cadre en métal, souvent en acier ou aluminium, solide conçu pour supporter le poids du kart et lui offrir une bonne stabilité pendant le transport.
- Des roues, en général robustes, souvent avec des pneus de grande taille, permettant une meilleure maniabilité, notamment sur des terrains variés, comme des surfaces pavées ou des terrains accidentés.
- Des supports, en général ajustables, pour maintenir le kart en place. Ces supports sont souvent recouverts de matériaux doux (comme du caoutchouc ou de la mousse) pour éviter d'endommager la carrosserie du kart.

Un chariot porte-kart doit aussi être léger et maniable. Par exemple, la plupart des chariots porte-kart sont pliables ou dotés de poignées pour faciliter leur transport, permettant de pousser ou tirer le chariot sans trop d'effort. De plus, la taille et la forme d'un chariot porte-kart sont spécifiques à la taille d'un kart de course. Les dimensions du chariot porte-kart assurent que l'ensemble chariot porte-kart et kart est bien stabilisé lors du transport. Parfois, des modèles spécifiques sont disponibles pour des karts de tailles différentes (par exemple, des karts pour enfants ou des karts de compétition.

Un chariot porte-kart est donc un équipement essentiel pour les pilotes de karting. En effet, il permet d'amener le kart du camion (ou autre véhicule ayant servi à emmener le kart jusqu'au circuit) aux stands avant une course et de ramener le kart des stands au camion lorsque la course est terminée. Entre le camion et les stands, le terrain peut être accidenté, à la fois à cause d'un relief inégal mais aussi parce qu'il présente des bosses et des creux ou une surface non lisse (tel que des cailloux) pouvant entraîner la chute du kart. Ces déplacements du kart à l'aide du chariot porte-kart peuvent donc être éprouvants physiquement et dangereux pour les personnes en charge du kart.

Il existe donc un besoin de fournir un chariot porte-kart permettant un transport du kart avec des efforts physiques moindres et de manière plus sécurisée.

### RESUME DE L'INVENTION

L'invention offre une solution aux problèmes évoqués précédemment, en fournissant un chariot porte-kart motorisé. Ainsi, le déplacement d'un kart avec le chariot porte-kart selon l'invention est facilité.

Un aspect de l'invention concerne un chariot porte-kart comprenant :
- Une structure adaptée pour supporter le poids d'un kart,
- Des supports adaptés pour assurer la stabilité du kart lors d'un déplacement du chariot porte-kart, et
- Exactement quatre roues,

le chariot porte kart étant caractérisé en ce qu'il comporte en outre :
- Un moteur électrique, et
- Au moins deux roues motorisées par le moteur électrique.

Outre les caractéristiques qui viennent d'être évoquées dans le paragraphe précédent, le chariot porte-kart selon un aspect de l'invention peut présenter une ou plusieurs caractéristiques complémentaires parmi les suivantes, considérées individuellement ou selon toutes les combinaisons techniquement possibles :
- les quatre roues sont motorisées ;
- le moteur électrique est adapté pour limiter une accélération du déplacement du chariot porte-kart à 0,33 mètre par seconde carrée et une décélération du déplacement du chariot porte-kart à -1 mètre par seconde carrée ;

- le moteur électrique est adapté pour limiter une vitesse du déplacement du chariot porte-kart à 1 mètre par seconde ;
- une télécommande du moteur électrique est adaptée pour commander le moteur électrique afin de modifier la vitesse de déplacement ;
- le moteur électrique comprend un système de freinage régénératif ;
- un frein manuel disposé sur la structure du chariot porte-kart adapté pour limiter la vitesse de déplacement ;
- la structure comprend un plateau bas formant une surface plane délimitée à l'avant par un axe formé par deux roues avant et délimitée à l'arrière par un axe formé par deux roues arrière, et
- le moteur électrique est disposé sur le plateau bas de la structure ;
- le moteur électrique est disposé le long de l'axe formé par les deux roues avant ;
- les roues motorisées du chariot porte-kart comprennent trois modes de fonctionnement :
   - un mode déplacement : une rotation des roues motorisées est entraînée par le moteur électrique,
   - un mode parking : la rotation des roues motorisées est interdite, et
   - un mode neutre : la rotation des roues motorisées est libre.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.

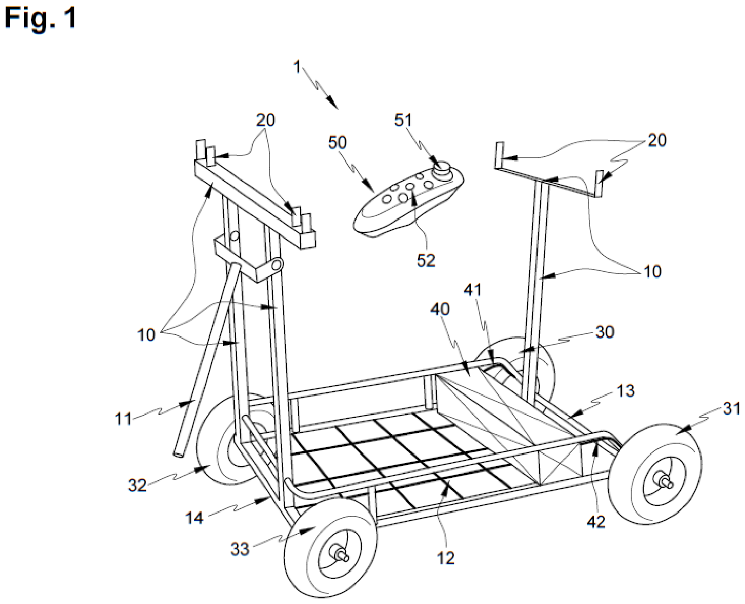

- La figure 1 montre une représentation schématique d'un exemple de chariot porte-kart.

Sauf précision contraire, un même élément apparaissant sur des figures différentes présente une référence unique.

### DESCRIPTION DETAILLEE

La figure 1 montre une représentation schématique d'un exemple de chariot porte-kart.

Le chariot porte-kart 1 comprend une structure 10. La structure est adaptée pour supporter le poids d'un kart, généralement compris entre 50 et 200 kilogrammes. Ainsi, la structure 10 est suffisamment solide pour porter un kart, que ce soit lorsque le chariot porte-kart est déplacé ou statique. La structure 10 peut être en métal, par exemple en acier ou en aluminium. La structure peut comprendre un bras 11 facilitant la manipulation du chariot porte-kart 1 durant son déplacement. Ce bras 11 permet notamment de changer la direction de déplacement du chariot porte-kart 1. Ce bras 11 est par exemple disposé au niveau de la partie arrière de la structure 10 et dépasse en arrière du chariot porte-kart 1 afin qu'une personne puisse suivre et guider le chariot porte-kart 1 tout en tenant ce bras 11.

Le chariot porte-kart 1 comprend aussi des supports 20, par exemple quatre supports 20. Les supports 20 sont adaptés pour assurer la stabilité du kart lors d'un déplacement du chariot porte-kart 1. Dit autrement, les supports 20 sont adaptés, pour que lors d'un déplacement du chariot porte-kart 1, le kart soit maintenu en place et ne puisse bouger relativement au chariot port-kart 1.

Le chariot porte-kart 1 comprend en outre exactement quatre roues 30, 31, 32, 33. La roue 30 est la roue avant gauche du chariot porte-kart 1. La roue 31 est la roue avant droite du chariot porte-kart 1. La roue 32 est la roue arrière gauche du chariot porte-kart 1. La roue 33 est la roue arrière droite du chariot porte-kart 1. Au moins deux roues du chariot porte-kart 1 peuvent être directionnelles, c'est-à-dire adaptées pour modifier la direction du déplacement du chariot porte-kart 1. Dans un premier exemple, les deux roues arrière 32 et 33 peuvent être des roues directionnelles. Dans un deuxième exemple, les deux roues avant 30 et 31 peuvent être des roues directionnelles. Dans un troisième exemple, les quatre roues 30, 31, 32, 33 du chariot porte-kart 1 peuvent être des roues directionnelles. Les roues ont par exemple un diamètre compris entre 15 et 25 centimètres. Chaque roue peut présenter un pneu avec des crampons afin d'améliorer l'adhérence du chariot porte-kart notamment sur des terrains en terre.

Le chariot porte-kart 1 comprend un moteur électrique 40. Le moteur électrique peut être adapté pour développer une puissance comprise entre 500 watts et 3000 kilowatts. La puissance du moteur électrique peut être adaptée pour permettre un déplacement du chariot porte-kart 1 lorsqu'un kart est posé sur le chariot porte-kart. Le moteur électrique 40 peut être configuré pour limiter l'accélération, la décélération et la vitesse de déplacement du chariot porte-kart 1. L'accélération du déplacement du chariot porte-kart 1 peut être limitée à 0,33 mètre par seconde carrée et la vitesse du déplacement du chariot porte-kart 1 peut être limitée à 1 mètres par seconde carrée. La décélération du déplacement du chariot porte-kart 1 peut être limitée à -1 mètre par seconde carrée En limitant l'accélération, la décélération et la vitesse de déplacement du chariot porte-kart 1, la sécurité est augmentée. Le moteur électrique peut être adapté pour permettre au chariot porte-kart 1 d'avancer ou de reculer.

Le chariot porte-kart 1 comprend au moins deux roues motorisées par le moteur électrique 40. Dans un exemple, les deux roues motorisées sont les deux roues avant 30 et 31. Dans un autre exemple, les deux roues motorisées sont les deux roues arrière 32 et 33. Les quatre roues du chariot porte-kart 1 peuvent aussi être motorisées.

Les roues motorisées du chariot porte-kart peuvent comprendre différents modes de fonctionnement. Un premier mode de fonctionnement est le mode déplacement. Dans ce mode, la rotation des roues motorisées est entraînée par le moteur électrique. Un deuxième mode de fonctionnement est le mode parking. Dans ce mode, la rotation des roues motorisées est interdite, i.e. aucune rotation des roues motorisées n'est possible. Un troisième mode de fonctionnement est le mode neutre. Dans ce mode, la rotation des roues motorisées est libre, i.e. est indépendante du fonctionnement du moteur électrique.

Le chariot porte-kart 1 peut aussi comprendre une batterie alimentant le moteur électrique 40. La batterie peut être comprise directement dans le moteur électrique ou être disposée à côté du moteur électrique. La puissance de la batterie est adaptée pour permettre un déplacement du chariot porte-kart 1 compris entre 30 minutes et 2 heures. De plus, la puissance de la batterie varie en fonction de la puissance du moteur électrique. La batterie est rechargeable. Par exemple, la batterie peut être rechargée en branchant un câble d'alimentation d'un chargeur de la batterie dans une prise murale. De manière complémentaire, le moteur électrique peut comprendre un système de freinage régénératif. Le système de freinage régénératif du moteur électrique 40 est un système de récupération de l'énergie cinétique du chariot porte-kart 40 qui permet de convertir une partie de celle-ci en une énergie électrique qui peut servir à recharger la batterie alimentant le moteur électrique 40.

La commande du moteur électrique 40 par un utilisateur du chariot porte-kart 1 peut être mise en œuvre de différentes manières. La commande du moteur électrique 40 permet de modifier la vitesse de déplacement du chariot porte-kart 1. Par exemple, le chariot porte-kart 1 peut comprendre un module de commande disposé sur la structure 10, préférentiellement sur la partie arrière de la structure par exemple sur le bras 11. De manière préférentielle, le chariot porte-kart 1 peut comprendre une télécommande 50 pour commander le moteur électrique 40. La télécommande 50 peut être sans fil et donc envoyer une commande au moteur électrique 40 via un procédé sans fil, par exemple bluetooth^{®} ou wifi^{®}. La télécommande 50 peut être un dispositif dédié spécifiquement à la commande du moteur électrique 40 ou être mise en œuvre en utilisant un téléphone intelligent, « smartphone » en anglais, par exemple en installant une application dédiée sur ledit téléphone intelligent. Lorsque la télécommande est sans fil, un procédé d'appairage entre la télécommande et le moteur électrique 40 peut être prévu afin de s'assurer que la télécommande commande uniquement le moteur électrique 40 du chariot porte-kart 1 voulu. Le procédé d'appairage peut être mis en œuvre en demandant à l'utilisateur de renseigner un identifiant du moteur, par exemple affiché sur le chariot porte-kart 1 ou en scannant un QR code affiché sur le chariot porte-kart 1. La télécommande 50 est de préférence utilisable avec une seule main. La télécommande 50 peut comprendre un joystick 51 permettant de modifier la vitesse de déplacement du chariot porte-kart 1 ainsi qu'un ou des boutons 52 additionnels. La commande du moteur électrique 40 peut aussi permettre de modifier la direction de déplacement du chariot porte-kart 1. La télécommande 50 peut par exemple permettre de modifier la direction de déplacement en orientant les roues arrière et/ou avant du chariot porte-kart 1. Par exemple, le joystick 51 peut permettre au chariot porte kart 1 d'effectuer un virage vers la gauche ou vers la droite. Le joystick 51 peut aussi permettre d'effectuer une marche avant ou une marche arrière. L'utilisation d'une télécommande permet à l'utilisateur de s'éloigner du chariot porte kart 1 notamment durant son déplacement. Cela permet notamment d'augmenter la sécurité de l'utilisateur. Il est aussi possible de fixer la télécommande sur le chariot porte-kart 1, par exemple si l'utilisateur préfère tenir le chariot porte kart 1 durant son déplacement (en même temps qu'il utilise la télécommande). La télécommande 50 peut aussi comprendre un moyen, tel que des boutons 52, pour sélectionner un mode de fonctionnement des roues motorisées.

Le chariot porte-kart 1 peut aussi comprendre un frein manuel 60. Le frein manuel 60 peut être disposé sur la structure 10. Le frein manuel 60 peut par exemple être fixé sur la partie arrière de la structure 10, par exemple au niveau du bras 11. Ce frein manuel 60 est adapté pour limiter la vitesse de déplacement du chariot porte-kart 1. Ce frein manuel 60 peut par exemple être un frein additionnel au frein du moteur électrique. Par exemple, même si le moteur électrique reçoit une commande pour atteindre une vitesse de déplacement donnée, le frein manuel, lorsqu'activé par un utilisateur, peut limiter la vitesse de déplacement du chariot porte-kart 1 à une vitesse de déplacement inférieure à la vitesse de déplacement donnée. Le frein additionnel 60 peut être particulièrement utile lorsque le chariot porte-kart est manipulé par deux utilisateurs. En effet, un premier utilisateur peut tenir la télécommande (à distance ou non du chariot porte kart) et le second utilisateur peut tenir le chariot porte-kart 1 et activer le frein manuel si besoin.

Le structure 10 du chariot porte-kart 1 peut comprendre un plateau bas 12. Le plateau bas 12 forme une surface plane. Le plateau bas 12 est délimité à l'avant par un axe 13 formé par les deux roues avant 30 et 31. Le plateau bas 12 est délimité à l'arrière par un axe 14 formé par deux roues arrière 32, 33. Sur les côtés, le plateau bas 12 est délimité préférentiellement respectivement par les roues gauches 30 et 32 et par les roues droites 31 et 33. Le plateau bas 12 est adapté pour accueillir divers outils ou matériels additionnels tels que le casque du conducteur du kart. Le moteur électrique 40 est disposé sur le plateau bas 12. Le placement du moteur électrique 40 sur le plateau bas 12 permet d'abaisser le centre de gravité du chariot porte-kart 1 et donc d'améliorer sa stabilité. De manière préférentielle, le moteur électrique 40 est disposé sur la partie avant du plateau bas 12, par exemple le long de l'axe 13 formé par les deux roues avant 30 et 31. Etant donné que le centre de gravité d'un kart est situé sur la partie arrière du kart, la stabilité du chariot porte-kart 1, lorsqu'un kart est posé dessus, est améliorée grâce au positionnement du moteur électrique sur la partie avant du plateau bas 12.

Le poids du chariot porte-kart 1 est réduit au maximum et est inférieur à 50 kilogrammes, préférentiellement à 30 kilogrammes, afin d'être suffisamment maniable. Le poids du chariot porte-kart 1 dépend notamment de la puissance du moteur électrique et de la puissance de la batterie.

## Revendications

1. Chariot porte-kart (1) comprenant :
- Une structure (10) adaptée pour supporter le poids d'un kart,
- Des supports (20) adaptés pour assurer la stabilité du kart lors d'un déplacement du chariot porte-kart (1), et
- Exactement quatre roues (30, 31, 32, 33),
le chariot porte kart étant **caractérisé en ce qu'**il comporte en outre :
- Un moteur électrique (40), et
- Au moins deux roues motorisées par le moteur électrique (40).

2. Chariot porte-kart selon la revendication 1 dans lequel les quatre roues (30, 31, 32, 33) sont motorisées.

3. Chariot porte-kart selon la revendication 1 ou 2 dans lequel le moteur électrique (40) est adapté pour limiter une accélération du déplacement du chariot porte-kart (1) à 0,33 mètres par seconde carrée et une décélération du déplacement du chariot porte-kart (1) à -1 mètres par seconde carrée.

4. Chariot porte-kart selon l'une quelconque des revendications précédentes dans lequel le moteur électrique (40) est adapté pour limiter une vitesse du déplacement du chariot porte-kart (1) à 1 mètres par seconde.

5. Chariot porte-kart selon l'une quelconque des revendications précédentes comprenant en outre une télécommande (50) du moteur électrique (40) adaptée pour commander le moteur électrique afin de modifier la vitesse de déplacement.

6. Chariot porte-kart selon l'une quelconque des revendications précédentes dans lequel le moteur électrique (40) comprend un système de freinage régénératif.

7. Chariot porte-kart selon l'une quelconque des revendications précédentes comprenant en outre un frein manuel (60) disposé sur la structure (10) du chariot porte-kart adapté pour limiter la vitesse de déplacement.

8. Chariot porte-kart selon l'une quelconque des revendications précédentes dans lequel :
- La structure (10) comprend un plateau bas (12) formant une surface plane délimitée à l'avant par un axe (13) formé par deux roues avant (30, 31) et délimitée à l'arrière par un axe (14) formé par deux roues arrière (32, 33), et
- Le moteur électrique (40) est disposé sur le plateau bas (12) de la structure (10).

9. Chariot porte-kart (1) selon la revendication précédente dans lequel le moteur électrique (40) est disposé le long de l'axe (13) formé par les deux roues avant (30, 31).

10. Chariot porte-kart (1) selon l'une quelconque des revendications précédentes dans lequel les roues motorisées du chariot porte-kart (1) comprennent trois modes de fonctionnement :
- Un mode déplacement : une rotation des roues motorisées est entraînée par le moteur électrique,
- Un mode parking : la rotation des roues motorisées est interdite, et
- Un mode neutre : la rotation des roues motorisées est libre.
